# EUROPÄISCHE PATENTSCHRIFT

(11) **EP 2 668 057 B1**
(45) Veröffentlichungstag und Bekanntmachung des Hinweises auf die Patenterteilung: **24.03.2021**
(21) Anmeldenummer: 11807654.6
(22) Anmeldetag: 13.12.2011
(51) Int. Cl.: B60L 3/04, B60L 50/51, B60L 50/60, B60L 53/10, B60L 53/14, B60L 53/65, B60L 58/20, B60L 3/00, B60R 21/01

(54) **SYSTEM ZUR HOCHVOLTABSCHALTUNG IN EINEM FAHRZEUG**
SYSTEM FOR HIGH-VOLTAGE DISCONNECTION IN A VEHICLE
SYSTÈME DE MISE HORS CIRCUIT DES DISPOSITIFS DE HAUT VOLTAGE DANS UN VÉHICULE

(30) Priorität: 25.01.2011 DE 102011003082
(43) Veröffentlichungstag der Anmeldung: 04.12.2013
(73) Patentinhaber: Robert Bosch GmbH, 70442 Stuttgart (DE)
(72) Erfinder: FASSNACHT, Jochen, 75365 Calw (DE)
(86) Internationale Anmeldenummer: PCT/EP2011/072567
(87) Internationale Veröffentlichungsnummer: WO 2012/100877

(56) Entgegenhaltungen:
- EP-A1- 1 351 107
- WO-A2-2009/112165
- DE-A1- 10 102 242
- US-B1- 7 402 068

## Beschreibung

Die vorliegende Erfindung betrifft den Fahrzeugbereich, insbesondere für Hybrid- und Elektrofahrzeuge. Besonders betrifft die vorliegende Erfindung ein System zur Hochvoltabschaltung in einem Fahrzeug.

### Stand der Technik

Elektrische Komponenten eines Hybrid- bzw. Elektrofahrzeuges werden meist mit für Personen gefährlicher Spannung betrieben. Damit eine solche Spannung nicht die Gesundheit bzw. das Leben einer Person gefährdet, muss sichergestellt sein, dass diese im Service- bzw. Fehlerfall nicht derart auf leitende Komponenten des Fahrzeugs übertragen wird bzw. dem offenen Zugriff ausgesetzt ist und hierdurch ein Gefährdungspotential darstellt.

Herkömmliche Hybrid- bzw. Elektrofahrzeuge weisen hierzu im Wesentlichen gekapselte Komponenten auf, durch welche ein direkter Zugriff von außerhalb auf spannungsführende Teile unterbunden wird. In einem Fehler- oder Servicefall kann es jedoch notwendig sein, Hochvoltverkabelungen zwischen den Komponenten zu lösen bzw. deren Gehäuse zu öffnen. Bei einem Unfall kann ein derartiger Eingriff durch Gewalteinwirkung von außen erfolgen.

In solch einem Fall, in dem die Integrität des Hochvoltkreises bzw. dessen trennende Isolierung nicht mehr sichergestellt ist, muss Sorge getragen werden, dass hochvoltführende Komponenten nicht derart freigelegt werden, so dass ein ungeschützter Zugriff von außen möglich ist.

Hierdurch finden lokal an den Gehäusen bzw. Steckelementen des Spannungskreises der hochvoltführenden Komponenten Kontaktelemente Verwendung, welche ein Auftrennen der Hochvoltverkabelung bzw. des Gehäuses detektieren und als Reaktion eine Hochvoltabschaltung des gesamten Systems auslösen.

Eine entsprechende Maßnahme kann in einem sogenannten Hochvoltinterlock gesehen werden, in anderen Worten einem Abschalten der gefährlichen Spannung in hochvoltführenden Komponenten, falls schützende Abdeckungen entfernt werden bzw. hochvoltführende Steckverbindungen gelöst werden.

Herkömmlich kann eine derartige Funktionalität durch eine sogenannte Pilotlinie bzw. Hochvoltinterlocklinie realisiert sein, welche unterbrochen wird, sobald ein Stecker oder Deckel hochvoltführender Komponenten geöffnet bzw. gelöst wird und somit gefährliche Spannung frei legen würde.

Die Pilotlinie kann hierbei als serielle Kontaktverschaltung ausgebildet und mit einem zentralen Auswerteelement bzw. einer Auswerteschaltung verbunden sein. Die serielle Verschaltung der Kontaktelemente an sämtlichen hochvoltführenden Komponenten eines Fahrzeugs muss insbesondere gewährleisten, dass eine einzige komponentenunabhängige Öffnung oder Diskonnektierung eines hochvoltführenden Elementes ausreicht, um das vollständige System zu deaktivieren.

Eine zugehörige Auswerteschaltung kann beispielsweise im Pulswechselrichter (PWR) oder in der Batterie angeordnet sein und kann im Weiteren über einen Systembus bzw. Kommunikationsbus, beispielsweise einem CAN-Bus, eine Abschaltanweisung an die restlichen Komponenten des Systems senden.

Beispielsweise können als Systemreaktion bei geöffneter Pilotlinie alle in den Zwischenkreis einspeisenden Quellen abgeschaltet, der elektrische Antrieb abgeschaltet sowie alle relevanten Energiespeicher entladen werden. Quellen können beispielsweise durch Öffnen der Batterieschütze abgeschaltet werden, elektrische Antriebe durch Öffnen einer Kupplung und Stillsetzen des Antriebs bzw. durch aktiven Kurzschluss.

Eine derartige zentrale Abschaltung ist jedoch sehr aufwendig und kostenintensiv, da zusätzlicher Verkabelungsaufwand, Stecker bzw. Kontakte und eine zentrale Auswerteschaltung erforderlich sind. Insbesondere muss eine einzelne Pilotlinie seriell durch sämtliche hochvoltführenden Komponenten geführt werden, um eine sichere Abschaltung in einem Fehler- und/oder Servicefall zu gewährleisten. Eine entsprechende einzelne, serielle Pilotlinie kann jedoch auch als fehleranfällig angesehen werden.

Die Offenlegungsschrift DE 101 02 242 A1 offenbart ein System zur Hochvoltabschaltung in einem Fahrzeug, wobei die Hochvoltabschaltung mittels einer zentralen Steuereinheit ausgelöst wird. Die Offenlegungsschrift WO 2009/112165 A2 offenbart ein Verfahren und eine Vorrichtung zur Überwachung von Hochvoltverbindungen eines Fahrzeugs, wobei zumindest zwei hochvoltführende Komponenten mittels einer Leitungsschleife überwacht und im Fehlerfall deaktiviert werden. Die europäische Patentanmeldung EP 1 351 107 A1 offenbart ein Sicherheitssystem für einen elektrischen Antrieb, das eine von einem Zentralrechner ausgehende Sicherheitsschleife aufweist, die alle hochvoltführenden Komponenten des Systems durchzieht und von dem Zentralrechner auf Defekte überwacht wird.

### Offenbarung der Erfindung

Ein Aspekt der vorliegenden Erfindung ist es, eine verbesserte Hochvoltabschaltung gemäß des unabhängigen Anspruchs bereitzustellen.

Weitere bevorzugte Ausgestaltungen der vorliegenden Erfindung ergeben sich aus den abhängigen Ansprüchen.

Ein Aspekt der vorliegenden Erfindung ist die Dezentralisierung der Funktionalität einer Pilotlinie. Anstatt eine zentrale Auswerteeinheit bereitzustellen, welche die Öffnung jedes Kontaktes detektiert, wird vielmehr eine Detektion dezentral und somit lokal in jeder hochspanungsführenden Komponente vorgesehen.

Hierdurch lässt sich zunächst die vollständige, serielle Verkabelung sämtlicher hochvoltführender Komponenten mit einer einzelnen Pilotlinie vermeiden. Eine entsprechende Dezentralisierung der Pilotlinie kann Kosten einsparen, indem ein Kontaktelement im bzw. am Gehäuse einer hochvoltführenden Komponente angeordnet ist sowie diese eine dezentrale Auswerteschaltung aufweist. Eine detektierte Öffnung eines Gehäuses bzw. ein Lösen eines Anschlusselementes mit gefährlicher Spannung kann über einen Systembus bzw. Datenbus, beispielsweise über den CAN-Bus an, die weiteren hochvoltführenden Komponenten sowie zusätzliche relevante Komponenten weitergeleitet werden.

Kabelverbindungen für diese dezentrale Pilotlinie können hierbei im Gehäuse der hochvoltführenden Komponente angeordnet sein bzw. es können einfache Kontaktbrücken in den Steckern bzw. dem Gehäuse verwendet werden, welche derart reagieren dass sie bei Öffnung des Gehäuses bzw. Diskonnektierung eines Steckers einen Kontakt unterbrechen.

Die vorliegende Erfindung stellt bezüglich des Hochvoltschutzes dieselbe Funktionalität bereit wie eine zentrale Pilotlinie, jedoch ohne deren zusätzliche Verkabelung.

Anstatt eines zentralen Kabels, welches durch alle Komponenten geschleift und zentral ausgewertet wird, ist eine dezentrale Auswertung in jeder hochvoltführenden Komponente vorgesehen. Über den CAN-Bus oder einen anderen geeigneten Datenbus kann die Abschaltung bzw. Schnellentladung des Hochvoltsystems angefordert werden.

Als weiteres Ereignis, welches eine Hochvoltabschaltung auslösen soll, kann beispielsweise das Abstecken eines Steckkontaktes bzw. das Öffnen eines Gehäuses sein, oder allgemein ein Ereignis, welches den Berührschutz einer hochvoltführenden Komponente reduzieren würde, und nachfolgend wird eine Reaktion des Systems zur Abschaltung aller hochvoltführenden Komponenten im Fahrzeug ausgelöst.

Bei einer Unterbrechung des Datenbusses zur Kommunikation der Hochvoltverbraucher muss nach einer definierten kurzen Latenzzeit eine Schnellentladung und ein aktiver Kurzschluss der Pulswechselrichter durchgeführt werden, da aufgrund der fehlenden Kommunikation keine sicherheitsrelevanten Nachrichten mehr verschickt werden können.

Die Auslösung einer Systemreaktion zur Schnellabschaltung aller hochvoltführenden Komponenten kann somit auch direkt durch den Datenbus erfolgen.

Ein entsprechender Datenbus könnte beispielsweise eingerichtet sein, eine Diskonnektierung eines Anschlusselementes des Datenbusses von einer Komponente zu detektieren und dies als Störung bzw. Ausfall des Busses darzustellen. Aus Sicherheitsgründen erfolgt eine derartige Detektion z.B. beim CAN-Bus automatisch. Somit kann sich die Umsetzung der dezentralen Funktionalität der Pilotlinie auch dadurch realisieren lassen, im Wesentlichen zu detektieren, ob ein Anschlusselement eines Datenbusses von einer Komponente, zum Beispiel einer hochvoltführenden Komponente, abgesteckt wird.

Dies kann weiterhin damit ergänzt werden, dass beispielsweise der Pulswechselrichter, die Batterie, das Ladegerät bzw. ein Gleichspannungswandler bzw. ein DC/DC-Wandler nur geöffnet werden kann bzw. ein Hochvoltanschluss abgesteckt oder geöffnet werden kann, wenn zunächst der zur jeweiligen hochvoltführenden Komponente zugehörige Stecker des CAN-Busses bzw. dessen Anschlusselement vorher entfernt bzw. diskonnektiert wurde.

In anderen Worten ist das Anschlusselement des CAN-Busses an einer hochvoltführenden Komponente dasjenige Element, welches bei einem Ausbau einem Öffnen bzw. Abstecken der jeweiligen Komponente vom System bzw. aus dem Fahrzeug zuerst entfernt bzw. abgesteckt werden muss. Somit kann eine Reduzierung eines Berührschutzes erst erfolgen, wenn das Anschlusselement des Datenbusses vom Gehäuse entfernt wurde. Dieses Entfernen entspricht dabei dem bewussten Hervorrufen einer Störung im Wissen, dass diese Störung, aufgrund des Automatismus des Datenbusses eine Hochvoltabschaltung zwingend hervorrufen wird.

Durch geeignete konstruktive Maßnahmen ist hierbei zu verhindern, dass diese erste Absteckungspflicht umgangen werden kann, somit dass der Berührschutz eben nicht ohne Entfernung des Anschlusselementes des Datenbusses reduziert werden kann. Beispielsweise können mechanische Elemente, z.B. gekoppelt an das Anschlusselement des Datenbusses, ein Abstecken weiterer Anschlusselemente, z.B. der Hochvoltleitungen bzw. ein Öffnen des Gehäuses unterbinden.

Wird nun im CAN-Bus bzw. im Datenbus eine solche Unterbrechung bzw. ein derartiges Abstecken von einer Komponente erkannt, so muss dies die Systemreaktion des Schnellabschaltens der gefährlichen Spannung im gesamten System auslösen. Mit einer derartigen Funktionalität kann sowohl ein Berührschutz als auch ein Lichtbogenschutz realisiert werden. Eine solche Funktionalität kann jedoch bedingen, dass die entsprechende hochvoltführende Komponente eine gewisse Eigenintelligenz (Steuergerät) besitzt und/oder mit einem Systembus bzw. Datenbusanschluss ausgerüstet ist.

Somit muss sichergestellt sein, dass ein Gehäuse einer hochvoltführenden Komponente bzw. ein Anschlusselement der Hochvoltversorgung von Batterie, Pulswechselrichter, Ladegerät und/oder DC/DC-Wandler derart ausgebildet ist, dass zunächst der Busstecker abgesteckt werden muss, bevor das Gehäuse geöffnet werden bzw. ein Hochvoltanschlusselement abgezogen werden kann.

Unter einer Reduktion eines Berührschutzes werden hier jegliche nicht zerstörende Maßnahmen verstanden, die die Zugriffsmöglichkeiten auf hochvoltführende Teile einer hochvoltführenden Komponente erhöhen kann, wie z.B. das Öffnen des Gehäuses, Entfernungen einer Abdeckung oder das Abstecken von hochvoltführenden Leitungen.

Eine elektrische Maschine, welche möglicherweise kein Steuergerät besitzt bzw. welche keine intelligente Komponente darstellt, muss durch unzugänglichen Verbau bzw. durch festes Anbringen der hochvoltführenden Kabel bzw. nur durch zerstörenden Zugang zu den Hochvoltanschlusselementen oder der Schutzabdeckung bzw. des Gehäuses, beispielsweise durch Nieten, geschützt werden. Vergleichbare Maßnahmen können auch für einen Bordnetzverteiler vorgesehen werden. Dieser kann jedoch auch in eine hochvoltführende Komponente, beispielsweise in den Pulswechselrichter integrierbar sein, und somit über dessen Busleitung bzw. Busanschlusselement überwacht werden.

Alternativ können Komponenten, welche an sich keine Verbindung zu einem Datenbus benötigen, wie beispielsweise die elektrische Maschine oder der Bordnetzverteiler, dadurch geschützt werden, dass der Datenbus trotzdem durch die entsprechende Komponente durchgeschleift wird und somit zunächst eine Steckverbindung aufgetrennt werden muss, bevor das Gehäuse geöffnet, ein Deckel oder Stecker entfernt werden kann.

Bei einem möglicherweise im Fahrzeug vorgesehenen Ladegerät, beispielsweise einem potentialgetrennten Ladegerät ohne Energieeinspeisemöglichkeit, kann auch das Gehäuse derart ausgebildet sein, dass es sich erst öffnen lässt, wenn sowohl der Busanschlussstecker als auch der Control-Pilot-Stecker bzw. der Netzstecker am Gehäuse gelöst bzw. diskonnektiert worden sind.

Im Falle, dass das Anschlusselement des Datenbusses die Funktionalität der Pilotlinie übernehmen soll, kann das Gehäuse spezielle konstruktive Merkmale aufweisen, wie zum Beispiel zusätzliche Abdeckungen bzw. Bügel, welche erst demontiert werden können, wenn das Anschlusselement eines Datenbusses abgesteckt bzw. diskonnektiert wurde.

Bei Detektion einer Verletzung der Integrität des Datenbusses sind somit in jedem Fall als Systemreaktion zur Abschaltung der Hochspannung sämtliche Einspeisequellen in den Zwischenkreis abzuschalten, wie beispielsweise Batterie, Elektroantriebe und Ladegerät, und sofort alle Energiespeicher zu entladen. Insbesondere ist es vorteilhaft, dass ein gestörter Bus somit den vollständigen Hochvoltkreis bzw. das gesamte Hochvoltsystem deaktiviert bzw. hierdurch eine hochvoltführende Komponente selbstständig eine Notabschaltung durchführt.

Hochvoltanschlusselemente sollten trotzdem in ungestecktem Zustand berührgeschützt ausgeführt sein gemäß der Spezifikation IPXXB.

Durch die einfachere bzw. fehlende zentrale Pilotlinienverkabelung bzw. Hochvoltinterlockverkabelung kann sich eine Kostenreduktion ergeben. Besonders bei der Absicherung über den Datenbus ergibt sich eine höhere Verfügbarkeit des Gesamtsystems, da eine Komponente, welche in Sinne von Fail-Safe bei einer Fehlfunktion zur einer Abschaltung des Gesamtsystems führen muss, wegfällt. Im Falle der dezentralen Detektierung können mehrere, dezentrale Auswerteschaltungen benötigt werden, welche jedoch eventuell einfach bzw. günstig ausgeführt werden können, insbesondere falls ein digitaler Prozessoreingang bereitsteht. In diesem Fall entfallen Verkabelungskosten für die Interlocklinie durch das gesamte Fahrzeug.

Weiterhin kann man zur Erhöhung der Funktionssicherheit beispielsweise ein periodisches Signal, zum Beispiel ein "Hochspannungsinterlock-Closed"-Signal über den Datenbus senden. Im Falle, dass dieses Signal nicht mehr bzw. mehr regelmäßig gesendet/empfangen wird, wird als Systemreaktion die Hochvoltabschaltung des Systems ausgelöst.

Ausführungsbeispiele der Erfindung sind in den Zeichnungen dargestellt und in der nachfolgenden Beschreibung näher erläutert.

### Es zeigen

Fig. 1 eine exemplarische Ausgestaltung eines Hochvoltsystems mit Abschaltung durch eine zentrale Pilotlinie;
Fig. 2 eine exemplarische Ausführungsform des Hochvoltsystems gemäß einem nicht erfindungsgemäßen Ausführungsbeispiels;
Fig. 3 eine weitere exemplarische Ausführungsform eines Hochvoltsystems gemäß der vorliegenden Erfindung;
Fig. 4 eine exemplarische Ausführungsform einer Auswerteschaltung gemäß der vorliegenden Erfindung; und
Fig. 5 ein exemplarisches Flussdiagramm eines Verfahrens zur Hochvoltabschaltung in einem Fahrzeug gemäß einem nicht erfindungsgemäßen Ausführungsbeispiels.

### Ausführungsformen der Erfindung

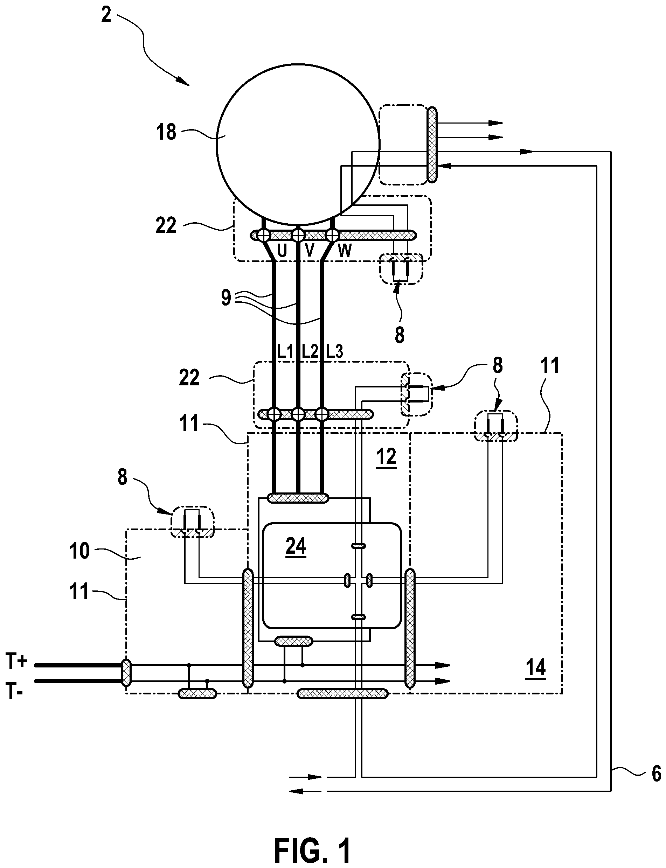

Fig. 1 zeigt eine exemplarische Ausgestaltung eines Hochvoltsystems mit Abschaltung durch eine zentrale Pilotlinie.

Fig. 1 zeigt ein exemplarisches Hochvoltsystem 2 eines Kraftfahrzeuges bestehend aus den Komponenten einer Verteilerbox 10, eines Pulswechselrichters 12, eines Gleichspannungswandlers 14 bzw. DC/DC-Wandler 14 sowie einer Elektromaschine 18.

Elektromaschine 18 ist unter Verwendung von Hochvoltleitungen 9 an Pulswechselrichter 12 angeschlossen.

Gestrichelte Linien stellen in Fig. 1 insbesondere ein Gehäuse 11, zum Beispiel ein Hochvoltschutzgehäuse, der jeweiligen Komponente dar oder aber, beispielsweise im Falle der Hochvoltleitung 9 Abdeckungen 22 für die Leistungsanschlüsse der Elektromaschine 18 bzw. des Pulswechselrichters 12.

An geeigneter Stelle der Gehäuse bzw. der Abdeckungen 22 angebracht sind Detektionskontakte 8, welche seriell durch eine Pilotlinie 6 verbunden sind. Die serielle Verschaltung der Detektionskontakte 8 ermöglicht die Detektierung eines Öffnens eines einzelnen Detektionskontaktes 8 unter Verwendung nur einer Pilotlinie 6. Eine zentrale Auswerteschaltung 24 ist in Fig. 1 exemplarisch im Pulswechselrichter 12 vorgesehen.

Wenn nun einer der Detektionskontakte 8 geöffnet wird, so ist unter Verwendung der zentralen Pilotlinie 6 und der Auswerteschaltung 24 ein solches Öffnen detektierbar, wodurch ausgehend von der Auswerteschaltung 24 und im Weiteren exemplarisch vom Pulswechselrichter 12, eine Hochvoltabschaltung des gesamten Systems 2 ausgelöst werden kann. Eine entsprechende Auslösung kann beispielsweise unter Verwendung eines, in Fig. 1 nicht dargestellten, Datenbusses 4 erfolgen.

Eine Einspeisung der gefährlichen Spannung kann über die Anschlüsse T+ und T- der Fig. 1 realisiert sein.

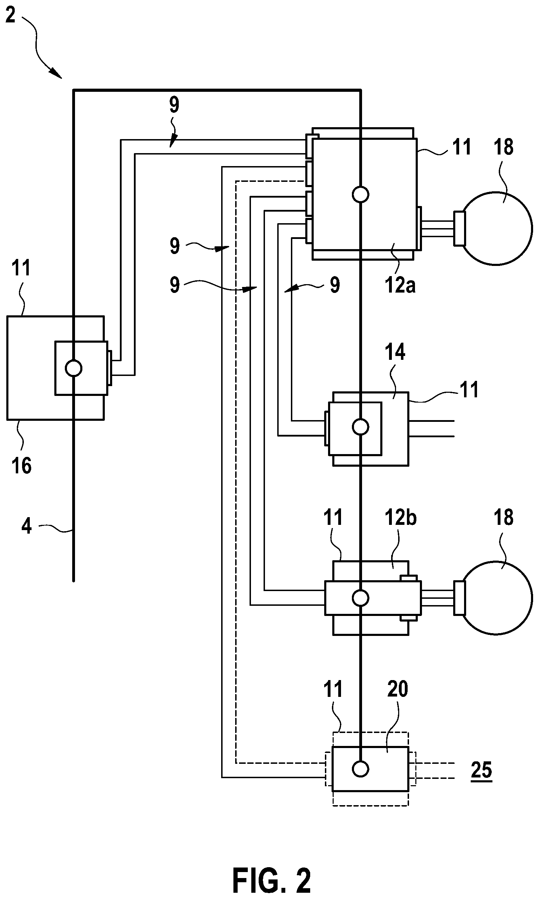

Weiter Bezug nehmend auf Fig. 2 wird eine exemplarische Ausführungsform des Hochvoltsystems gemäß einem nicht erfindungsgemäßen Ausführungsbeispiel dargestellt, mittels welchem das Verständnis der Erfindung erleichtert wird.

In Fig. 2 ist ein System 2 der vorliegenden Erfindung dargestellt, welches eine Funktion der zentralen Pilotlinie 6 unter Verwendung des Datenbusses 4 bzw. Systembusses 4 bereitstellt.

In Fig. 2 exemplarisch angeordnet sind Batterie 16, Pulswechselrichter 12a, angeschlossen an E-Maschine 18, DC/DC-Wandler 14, angeschlossen an das 12V-Bordnetz des Fahrzeugs, Klima-Pulswechselrichter 12b mit nachgeschalteter Elektromaschine 18 sowie Ladegerät 20, welches beispielsweise an das öffentliche Stromnetz 25 anschließbar ist.

Ausgehend von Pulswechselrichter 12a sind Hochvoltleitungen 9 zu den einzelnen Komponenten Batterie 16, DC/DC-Wandler 14, Klima-Pulswechselrichter 12b sowie Ladegerät 20 dargestellt. Es muss nun im Rahmen des Systems 2 gemäß Fig. 2 sichergestellt sein, dass im Falle des Öffnen eines Gehäuses 11 bzw. beim Entfernen eines Hochvoltleiters 9 eine Systemabschaltung der gefährlichen Spannung ausgelöst wird.

Der Datenbus 4 ist in Fig. 2 nur schematisch an die einzelnen Komponenten angebunden, ohne auf eine explizite Realisierung der Stecker bzw. Anschlusselemente bzw. deren Mechanik einzugehen.

Insbesondere bevorzugt ist jedoch eine Ausgestaltung von den Steckerelementen des Datenbusses 4, der Gehäuse 11 sowie der Anschlusselemente der Hochvoltleitung 9 derart, dass ein Gehäuse 11 erst geöffnet und eine Hochvoltleitung 9 erst dann von einer Komponente trennbar ist, wenn das Anschlusselement des Datenbusses 4 von der jeweiligen Komponente 12a, 12b, 14, 16, 20 und gegebenenfalls 18 entfernt bzw. abgesteckt wurde.

Die Diskonnektierung eines Datenbusanschlusselementes ist aufgrund der dadurch auftretenden Störung bzw. des dadurch auftretenden Ausfalls des Datenbusses erkennbar und es erfolgt nachfolgend die sofortige Hochvoltabschaltung des Systems 2.

Im Falle der Komponenten 12a, 12b, 14 und 16 ist somit gefordert, dass das Gehäuse bzw. erst öffenbar ist bzw. die Hochvoltstecker erst absteckbar sind, wenn der Busstecker entfernt wurde. Im Falle des Ladegeräts 20 ist im Weiteren gefordert, dass auch das Entfernen von Netzstecker bzw. Control-Pilot Voraussetzung dafür ist, das Gehäuse öffnen bzw. die Hochvoltleitung 9 abstecken zu können.

Im Falle der Anbindung der jeweiligen Elektromaschine 18 an die Pulswechselrichter 12a,b sollte gefordert werden, dass die Stecker entweder durch Verbau gesichert oder vernietet, somit nur durch Zerstörung öffenbar sind, und dass das Gehäuse der Maschine erst öffenbar sein darf, wenn der Stecker entfernt wurde. Gleichfalls sollte das Gehäuse einer Elektromaschine 18 derart ausgebildet sein, um nur durch Zerstörung öffenbar zu sein.

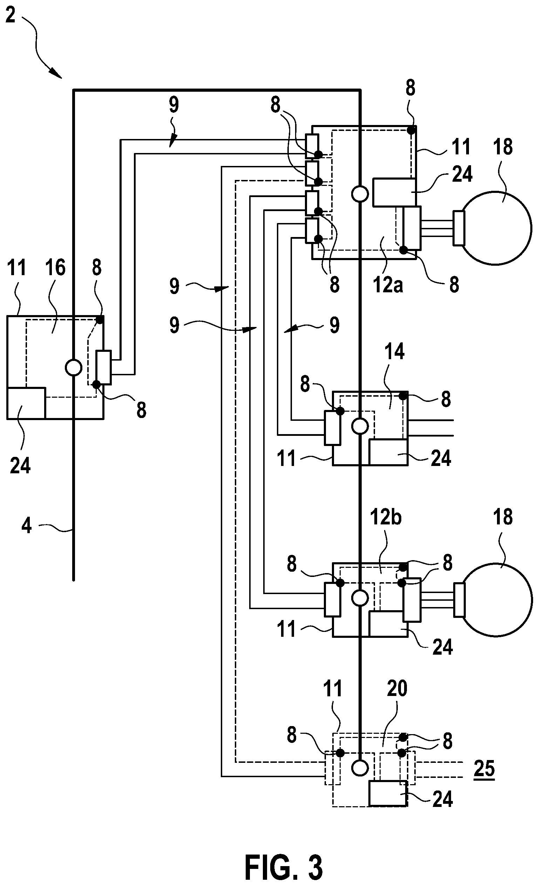

Weiter Bezug nehmend auf Fig. 3, ist eine weitere exemplarische Ausführungsform eines Hochvoltsystems gemäß der vorliegenden Erfindung dargestellt.

Der prinzipielle Aufbau sowie die Verschaltung der Komponenten gemäß Fig. 3 entspricht im Wesentlichen dem bzw. denen der Fig. 2, wobei gemäß Fig. 3 jede Komponente 12a, 12b, 14, 16, 20 und ggf. 18 lokale Detektionskontakte 8 sowie eine lokale Auswerteschaltung 24 aufweisen, welche eingerichtet ist, eine Detektion des Öffnens eines Detektionskontaktes 8 zu erkennen. Detektionskontakte 8 sind hierbei exemplarisch sowohl an den Anschlusselementen der Hochvoltleitung 9 sowie am Gehäuse 11 der jeweiligen Komponente angeordnet. Exemplarisch kann sich eine derartige lokale Detektion auch unter Verwendung einer seriellen Verschaltung der Detektionskontakte 8, wie in Fig. 3 dargestellt, realisieren.

Wird nun einer der Detektionskontakte 8 ausgelöst, beispielsweise unterbrochen, so wertet Auswerteschaltung 24 das Unterbrechen als Notwendigkeit, die Hochvoltabschaltung des Systems 2 durchzuführen. Hierzu greift die Auswerteschaltung 24 auf Datenbus 4 zurück, um die jeweils anderen Elemente des Systems 2 über die Notwendigkeit der Hochvoltabschaltung zu informieren und dort lokal die Systemreaktion zur Abschaltung der jeweils hochvoltführenden Komponente auszulösen.

Somit mag bei den Komponenten 12a, 12b, 14 und 16 beim Öffnen des Gehäuses oder beim Abnehmen eines Hochvoltsteckers ein Kontakt geöffnet werden, welcher über die lokale Auswerteschaltung 24 überwacht wird. Im Fall einer Auslösung wird über den Datenbus 4 die Notabschaltung des Hochvoltkreises eingeleitet. Im Falle des Ladegerätes 20 mag auch eine Detektion des Abnehmens des Steckers des öffentlichen Stromnetzes 25 überwacht werden, wobei dies nicht zwingend die Notabschaltung hervorrufen muss.

Die Absicherung der Elektromaschinen 18 und deren Anschluss an die Pulswechselrichter 12a, b kann dadurch erfolgen, dass die jeweiligen Stecker entweder durch Verbau gesichert oder vernietet oder sonstwie nur zerstörend öffenbar, oder aber das Gehäuse der Maschine erst öffenbar sein darf, wenn der Stecker abgezogen bzw. diskonnektiert wurde.

Alternativ kann Gehäuse und Stecker der Elektromaschine 18 über die Auswerteschaltung 24 sowie zugehörigen Detektionskontakt 8 des jeweiligen Pulswechselrichters 12a, b überwacht werden.

Ein Detektionskontakt 8 kann im Weiteren beispielsweise derart angeordnet sein, so dass der entsprechende Detektionskontakt 8 beim Lösen des Datenbussteckers von der jeweiligen Komponente 12a, b, 14, 16, 20 und gegebenenfalls 18 die Notabschaltung der gefährlichen Spannung auslöst.

Zur Erhöhung der Redundanz und Betriebssicherheit kann auch eine Ausgestaltung denkbar sein, welche im Wesentlichen einer Kombination der Systeme 2 gemäß Fig. 2 und Fig. 3 entspricht.

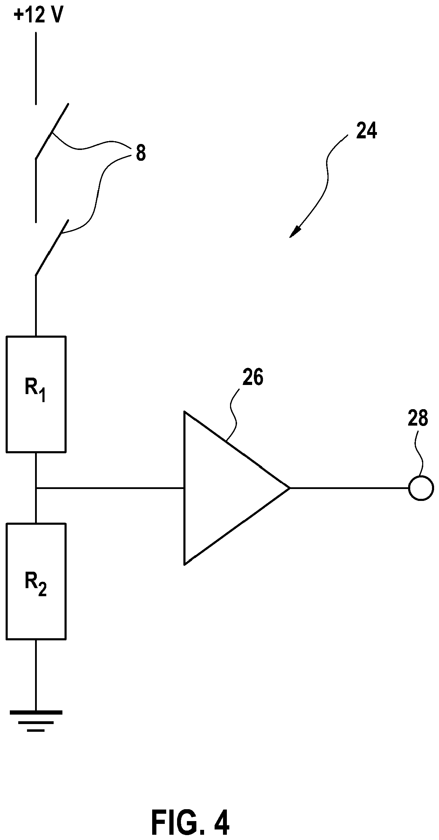

Weiter Bezug nehmend auf Fig. 4, ist eine exemplarische Ausführungsform einer Auswerteschaltung gemäß der vorliegenden Erfindung dargestellt.

Auswerteschaltung 24 ist exemplarisch unter Verwendung eines Operationsverstärkers, beispielsweise eines Schmitt-Triggers 26, realisiert, welcher über einen Spannungsteiler bestehend aus den Widerständen R₁ und R₂ und einem oder mehreren Detektionskontakten 8 bzw. Überwachungskontakten derart mit einer Versorgungsspannung, z.B. 12V, verbunden ist, so dass der Operationsverstärker 26 im Falle des Öffnens eines Detektionskontaktes 8 ein Detektionssignal an einen Eingang, beispielsweise einen digitalen Eingang 28 eines Überwachungssystems, weiterleitet.

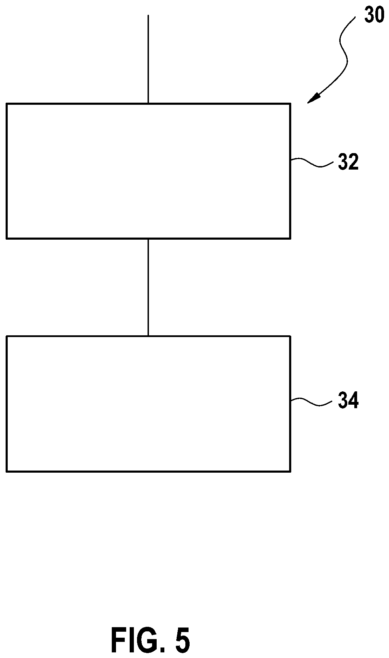

Weiter Bezug nehmend auf Fig. 5 ist ein exemplarisches Flussdiagramm eines Verfahrens zur Hochvoltabschaltung in einem Fahrzeug gemäß einem nicht erfindungsgemäßen Ausführungsbeispiels.

Fig. 5 zeigt ein Verfahren 30 zur Hochvoltabschaltung in einem Fahrzeug mit zumindest einer hochvoltführenden Komponente, aufweisend den Schritt lokales Detektieren 32 eines Ereignisses in einer hochvoltführenden Komponente, welches Ereignis eine Hochvoltabschaltung auslösen soll, wobei das Ereignis ist, dass ein Anschlusselement des Datenbusses 4 von der hochvoltführenden Komponente diskonnektiert wird, gekennzeichnet durch den Schritt lokales Auslösen 34 einer Hochvoltabschaltung der hochvoltführenden Komponente im Fahrzeug, wobei ein Berührschutzes der hochvoltführenden Komponente 10,12a,b,14,16,18,20 erst reduzierbar ist nach Diskonnektierung des Anschlusselementes des Datenbusses 4 von der hochvoltführenden Komponente 10,12a,b,14,16,18,20.

## Patentansprüche

1. System (2) zur Hochvoltabschaltung in einem Fahrzeug; das System umfassend
zumindest zwei hochvoltführenden Komponenten (10, 12a, b, 14, 16, 18, 20), wobei jede Komponente ein Gehäuse (11), zumindest ein Anschlusselement für einen Datenbus (4) und zumindest ein Anschlusselement für eine Hochvoltversorgung (9) aufweist, wobei jede hochvoltführende Komponente (10,12a,b,14,16,18,20)
ein Detektionskontakt (8) zur lokalen Detektion eines Ereignisses aufweist, wobei die hochvoltführenden Komponenten (10, 12a,b, 14, 16, 18,20) über den Datenbus kommunikativ gekoppelt sind,
**dadurch gekennzeichnet, dass**
- jede hochvoltführende Komponente (10, 12a, b, 14, 16, 18, 20) mittels dem jeweiligen Detektionskontakt (8) eingerichtet ist, lokal ein Ereignis zu detektieren, das eine Hochvoltabschaltung auslösen soll, dass
- jede hochvoltführende Komponente (10,12a,b,14,16,18,20) eine lokale Auswerteschaltung (24) aufweist und lokal eingerichtet ist, mittels einer der lokalen Auswerteschaltungen (24) als eine Reaktion auf die Detektion dieses
Ereignisses eine Hochvoltabschaltung mindestens einer hochvoltführenden Komponente (10, 12a,b, 14, 16, 18,20) auszulösen, und dass
- die lokale Auswerteschaltung (24) jeder hochvoltführenden Komponente (10, 12a, b, 14, 16, 18, 20) dazu ausgebildet ist, bei Detektion eines Ereignisses in der diese lokale Auswerteschaltung (24) aufweisenden Komponente (10, 12a, b, 14, 16, 18, 20) die jeweils anderen Komponenten (10, 12a, b, 14, 16, 18, 20) mittels des Datenbusses (4) über die Notwendigkeit der Hochvoltabschaltung zu informieren und dort die Hochvoltabschaltung lokal auszulösen.

2. System gemäß Anspruch 1,
wobei das Ereignis ein Ereignis ist aus der Gruppe bestehend aus Anschlusselement des Datenbusses von der hochvoltführenden Komponente diskonnektieren, Ausfall oder Störung des Datenbusses, Unterbrechung einer lokalen Pilotlinie/HV-Interlocklinie bei Öffnung des Gehäuses der hochvoltführenden Komponente und Auslösen eines lokalen Detektionskontaktes (8) der hochvoltführenden Komponente, insbesondere Abnehmen eines Anschlusselementes für die Hochvoltversorgung (9).

3. System gemäß zumindest einem der vorhergehenden Ansprüche, wobei zumindest eine hochvoltführende Komponente (10,12a,b,14,16,18,20) derart ausgebildet ist,
dass das Gehäuse (11) erst geöffnet werden kann nach Diskonnektierung des Anschlusselementes des Datenbusses (4) von der hochvoltführenden Komponente (10,12a,b,14,16,18,20); und/oder
dass das Anschlusselement einer Hochvoltleitung (9) erst diskonnektiert werden kann nach Diskonnektierung des Anschlusselementes des Datenbusses (4) von der hochvoltführenden Komponente (10,12a,b,14,16,18,20); und/oder
dass eine Reduzierung eines Berührschutzes der hochvoltführenden Komponente (10,12a,b,14,16,18,20) erst erfolgen kann nach Diskonnektierung des Anschlusselementes des Datenbusses (4) von der hochvoltführenden Komponente (10,12a,b,14,16,18,20).

4. System gemäß zumindest einem der vorhergehenden Ansprüche, wobei der Detektionskontakt (8) Bestandteil des Anschlusselementes des Datenbusses (4) ist.

5. System gemäß zumindest einem der vorhergehenden Ansprüche, wobei die hochvoltführende Komponente (10,12a,b,14,16,18,20) eine Komponente ist aus der Gruppe bestehend aus Pulswechselrichter (12a,b), Batterie (16), Elektromaschine (18), Ladegerät (20), Bordnetzverteiler (10) und Gleichspannungswandler (14); und /oder
wobei die Abschaltung der Hochspannung beinhaltet einspeisende Quellen zu deaktivieren, elektrische Antriebe zu deaktivieren und Energiespeicher zu entladen.

6. System gemäß zumindest einem der vorhergehenden Ansprüche, wobei das Ereignis ist ein Anschlusselement des Datenbusses (4) von der hochvoltführenden Komponente zu diskonnektieren; und
wobei zumindest eine hochvoltführende Komponente (10,12a,b,14,16,18,20) derart ausgebildet ist, so dass eine Reduzierung eines Berührschutzes der hochvoltführenden Komponente (10, 12a,b, 14, 16, 18,20) erst erfolgen kann nach Diskonnektierung des Anschlusselementes des Datenbusses (4) von der hochvoltführenden Komponente (10,12a,b,14,16,18,20).

7. Fahrzeug, insbesondere Elektrofahrzeug oder Hybridfahrzeug, aufweisend ein System (2) gemäß zumindest einem der vorhergehenden Ansprüche.

## Claims

1. System (2) for high-voltage disconnection in a vehicle; the system comprising at least two high-voltage-carrying components (10, 12a, b, 14, 16, 18, 20), wherein each component has a housing (11), at least one connection element for a data bus (4) and at least one connection element for a high-voltage supply (9), wherein each high-voltage-carrying component (10, 12a, b, 14, 16, 18, 20) has a detection contact (8) for locally detecting an event, wherein the high-voltage-carrying components (10, 12a, b, 14, 16, 18, 20) are coupled such that they can communicate using the data bus,
**characterized in that**
- each high-voltage-carrying component (10, 12a, b, 14, 16, 18, 20) is designed to locally detect an event, which event is intended to trigger high-voltage disconnection, by means of the respective detection contact (8), **in that**
- each high-voltage-carrying component (10, 12a, b, 14, 16, 18, 20) has a local evaluation circuit (24) and is designed locally to trigger high-voltage disconnection of at least one high-voltage-carrying component (10, 12a, b, 14, 16, 18, 20) by means of one of the local evaluation circuits (24) in response to the detection of this event, and **in that**
- the local evaluation circuit (24) of each high-voltage-carrying component (10, 12a, b, 14, 16, 18, 20) is designed, when an event is detected in the component (10, 12a, b, 14, 16, 18, 20) having this local evaluation circuit (24), to inform the respectively other components (10, 12a, b, 14, 16, 18, 20) about the need for high-voltage disconnection by means of the data bus (4) and to there locally trigger the high-voltage disconnection.

2. System according to Claim 1, wherein the event is an event from the group comprising disconnecting the connection element of the data bus from the high-voltage-carrying component, breakdown of or disturbance in the data bus, interruption of a local pilot line/HV interlock line when opening the housing of the high-voltage-carrying component, and triggering of a local detection contact (8) of the high-voltage-carrying component, in particular removing a connection element for the high-voltage supply (9).

3. System according to at least one of the preceding claims, wherein at least one high-voltage-carrying component (10, 12a, b, 14, 16, 18, 20) is formed in such a way that the housing (11) can only be opened after the connection element of the data bus (4) is disconnected from the high-voltage-carrying component (10, 12a, b, 14, 16, 18, 20); and/or that the connection element of a high-voltage line (9) can only be disconnected after the connection element of the data bus (4) is disconnected from the high-voltage-carrying component (10, 12a, b, 14, 16, 18, 20); and/or that electric-shock protection of the high-voltage-carrying components (10, 12a, b, 14, 16, 18, 20) can only be reduced after the connection element of the data bus (4) is disconnected from the high-voltage-carrying component (10, 12a, b, 14, 16, 18, 20).

4. System according to at least one of the preceding claims, wherein the detection contact (8) is a constituent part of the connection element of the data bus (4).

5. System according to at least one of the preceding claims, wherein the high-voltage-carrying component (10, 12a, b, 14, 16, 18, 20) is a component from the group comprising pulse-controlled inverter (12a, b), battery (16), electrical machine (18), charging device (20), on-board electrical system distributor (10) and DC voltage converter (14); and/or wherein disconnection of the high-voltage involves deactivating feeding sources, deactivating electrical drives and discharging energy storage means.

6. System according to at least one of the preceding claims, wherein the event is disconnection of a connection element of the data bus (4) from the high-voltage-carrying component; and wherein at least one high-voltage-carrying component (10, 12a, b, 14, 16, 18, 20) is formed in such a way that electric-shock protection of the high-voltage-carrying components (10, 12a, b, 14, 16, 18, 20) can only be reduced after the connection element of the data bus (4) is disconnected from the high-voltage-carrying component (10, 12a, b, 14, 16, 18, 20).

7. Vehicle, in particular electric vehicle or hybrid vehicle, having a system (2) according to at least one of the preceding claims.

## Revendications

1. Système (2) de mise hors circuit de la haute tension dans un véhicule ; le système comprenant au moins deux composants sous haute tension (10, 12a, b, 14, 16, 18, 20), chaque composant présentant un boîtier (11), au moins un élément de connexion pour un bus de données (4), et au moins un élément de connexion pour une alimentation en haute tension (9), chaque composant sous haute tension (10, 12a, b, 14, 16, 18, 20) présentant un contact de détection (8) pour la détection locale d'un événement, les composants sous haute tension (10, 12a, b, 14, 16, 18, 20) étant couplés en communication par le bus de données, **caractérisé en ce que**
- chaque composant sous haute tension (10, 12a, b, 14, 16, 18, 20) est aménagé au moyen du contact de détection (8) respectif pour détecter localement un événement qui doit déclencher une mise hors circuit de la haute tension,
- chaque composant sous haute tension (10, 12a, b, 14, 16, 18, 20) présente un circuit d'évaluation local (24) et est aménagé localement pour déclencher au moyen d'un des circuits d'évaluation locaux (24), en réponse à la détection de cet événement, une mise hors circuit de la haute tension d'au moins un composant sous haute tension (10, 12a, b, 14, 16, 18, 20), et
- le circuit d'évaluation local (24) de chaque composant sous haute tension (10, 12a, b, 14, 16, 18, 20) est réalisé, en cas de détection d'un événement dans le composant (10, 12a, b, 14, 16, 18, 20) présentant ce circuit d'évaluation local (24), pour informer les autres composants (10, 12a, b, 14, 16, 18, 20) respectifs au moyen du bus de données (4) de la nécessité de la mise hors circuit de la haute tension, et pour y déclencher localement la mise hors circuit de la haute tension.

2. Système selon la revendication 1, dans lequel l'événement est un événement issu du groupe composé du fait de déconnecter du composant sous haute tension un élément de connexion du bus de données, d'une défaillance ou d'un dérangement du bus de données, d'une interruption d'une ligne pilote locale/ d'une ligne d'interverrouillage HT à l'ouverture du boîtier du composant sous haute tension, et d'un déclenchement d'un contact de détection local (8) du composant sous haute tension, en particulier d'un retrait d'un élément de connexion pour l'alimentation en haute tension (9).

3. Système selon au moins l'une des revendications précédentes, dans lequel au moins un composant sous haute tension (10, 12a, b, 14, 16, 18, 20) est réalisé de telle sorte que
le boîtier (11) ne peut être ouvert qu'après que l'élément de connexion du bus de données (4) a été déconnecté du composant sous haute tension (10, 12a, b, 14, 16, 18, 20) ; et/ou
l'élément de connexion d'une ligne de haute tension (9) ne peut être déconnecté qu'après que l'élément de connexion du bus de données (4) a été déconnecté du composant sous haute tension (10, 12a, b, 14, 16, 18, 20) ; et/ou
une réduction d'une protection contre les contacts du composant sous haute tension (10, 12a, b, 14, 16, 18, 20) ne peut être effectuée qu'après que l'élément de connexion du bus de données (4) a été déconnecté du composant sous haute tension (10, 12a, b, 14, 16, 18, 20) .

4. Système selon au moins l'une des revendications précédentes, dans lequel le contact de détection (8) fait partie de l'élément de connexion du bus de données (4) .

5. Système selon au moins l'une des revendications précédentes, dans lequel le composant sous haute tension (10, 12a, b, 14, 16, 18, 20) est un composant issu du groupe composé d'un onduleur à impulsions (12a, b), d'une batterie (16), d'une machine électrique (18), d'un chargeur (20), d'un répartiteur de réseau de bord (10) et d'un convertisseur continu-continu (14) ; et/ou dans lequel la mise hors circuit de la haute tension comprend la désactivation des sources d'alimentation, la désactivation des entraînements électriques et la décharge des accumulateurs d'énergie.

6. Système selon au moins l'une des revendications précédentes, dans lequel le résultat consiste à déconnecter du composant sous haute tension un élément de connexion du bus de données (4) ; et
dans lequel au moins un composant sous haute tension (10, 12a, b, 14, 16, 18, 20) est réalisé de telle sorte qu'une réduction d'une protection contre les contacts du composant sous haute tension (10, 12a, b, 14, 16, 18, 20) ne peut être effectuée qu'après que l'élément de connexion du bus de données (4) a été déconnecté du composant sous haute tension (10, 12a, b, 14, 16, 18, 20) .

7. Véhicule, en particulier véhicule électrique ou véhicule hybride, présentant un système (2) selon au moins l'une des revendications précédentes.
